# EUROPEAN PATENT APPLICATION

(11) **EP 2 208 904 A2**
(43) Date of publication of application: **21.07.2010**
(21) Application number: 10150751.5
(22) Date of filing: 14.01.2010
(51) Int. Cl.: F16D 3/62, F16D 3/79

(54) **Radially elastic coupling**

(30) Priority: 20.01.2009 DE 102009005561
(71) Applicant: Ellergon Antriebstechnik Gesellschaft m.b.H., 5300 Hallwang (AT)
(72) Inventor: Geislinger, Matthias, 5300, Hallwang (AT); Geislinger, Cornelius, 5300, Hallwang (AT)
(74) Representative: Beck & Rössig European Patent Attorneys

(57) **Abstract**

A radially elastic coupling comprises several radial braces (11), each comprising a radially inner end portion (12) and a radially outer end portion (15), as well as a plurality of jibs (13, 14) bent towards the braces (11), which in turn each comprise a free end portion (16, 17) and a bound end portion (18, 19). Here, the inner end portions (12) of the braces (11) are connected to one another. The jibs (13, 14) are each connected with a bound end portion (18, 19) to an outer end portion (15) of a brace (11). The free end portions (16) of a first group of jibs (13) are formed for connection to a first rotating machine part (1), whereas the free end portions (17) of a second group of jibs (14) are formed for connection to a second rotating machine part (2). All the braces (11) and jibs (13, 14) are arranged in a common plane and made of one single piece. Jibs (13, 14) pointing to one another, of adjacent braces (11) are radially interlaced. This enables large radial misalignment capacity of the coupling and high torque transmission capacity referred to the required construction space.

## Description

The present invention relates to a radially elastic coupling which is suitable for connecting rotating machine parts.

If the rotary axes of the machine parts to be coupled to one another exhibit radial misalignment, it can be compensated to a certain extent by a corresponding yielding of the coupling.

Such a coupling is known from DE 1 800 613 A. This coupling comprises two radial braces with a total of four jibs. Two jibs each are formed on one brace. Here, one jib of one brace can be coupled to a driving machine part and the other jib to a driven machine part. Thus, two connections each are available on the driving side and the output side. Such a design is only sufficient for couplings which are subject to low demands on the magnitude of torque to be transmitted and on the uniformity of the torque transmission.

Another disadvantage of the coupling according to DE 1 800 613 A is that owing to the short braces, the radial misalignment capacity is strongly limited. Accordingly, only a small radial offset between the machine parts to be coupled can be compensated.

From WO 91/16550 A1, it is known that the number of jibs arranged in succession in the circumferential direction can be increased to transmit a greater torque. However, this very significantly limits the radial misalignment capacity. Therefore, the couplings suggested in WO 91/16550 Al mainly serve for compensating angular offset between the machine parts to be coupled as well as for compensating an axial offset between them.

However, if the jibs are made longer, as is shown in US 3,625,024 A1, the required design space is increased considerably. In addition, there is only enough space available for two connections each. The torque transmission capacity is thus low.

The object of the present invention is creating a radially elastic coupling that is able to transmit high torques and offers substantially uniform torque transmission while simultaneously providing a high radial misalignment capacity.

This task is accomplished with a radially elastic coupling according to claim 1.

The coupling according to the invention comprises several radial braces, each comprising a radially inner end portion and a radially outer end portion, as well as a plurality of jibs bent towards the braces, which in turn each comprise a bound end portion and a free end portion. Here, the inner end portions of the braces are connected to one another, whereas the bound end portion of each jib is connected to an outer end portion of a brace. The free end portions of a first group of jibs serve for connection to a first rotating machine part. The free end portions of a second group of jibs are formed for connection to a second rotating machine part, so that torque transmission between the machine parts by means of the coupling becomes possible. All the braces and jibs are arranged in a common plane and made of one piece. The coupling according to the invention is particularly characterized by the fact that the jibs of adjacent braces pointing towards one another are radially interlaced.

In case of a radial displacement of the machine parts to be coupled, an elastic deformation of the structure formed by the braces and the jibs in the main plane of extent occurs. The braces are rigid in the radial direction and accordingly, effect a radial force support. However, in the circumferential direction, the braces are flexible. The same applies to the jibs in the radial direction. As a result, the coupling sections of the coupling connected to the various machine parts can move flexibly relative to one another.

In addition to compensation of radial displacement, the coupling according to the invention also permits fast compensation of axial displacements. Moreover, angular compensation is possible to a certain extent.

The coupling according to the invention can be radially inserted between two machine parts on account of its flat structure. This is advantageous especially in cases when owing to structural conditions, it is not possible to separate the machine parts from each other and dismantling of the machine would involve too much effort. The coupling can thus be installed or dismantled without great effort.

Moreover, several couplings can be stacked into an arrangement of couplings. In this manner, adjustment to the required torque transmission capacity can be achieved by very simple means.

By radially interlacing the jibs, a large radial compensation by the coupling is made possible, since the jibs run past one another and hence can be made relatively long. In addition, the torque transmission capacity referred to the required construction space is increased considerably as compared to the designs explained at the beginning, since the number of jibs and hence the number of connections for the driving or driven sides can be increased while the outer dimensions are compact. The latter in turn is favorable for a homokinetic torque transmission.

Advantageous embodiments of the present invention are indicated in further claims.

Thus, for example, every brace can have one jib of the first group and one jib of the second group. Moreover, the jibs of a brace can be arranged on opposite sides of the relevant brace. These measures allow a particularly compact design at high torque transmission capacity.

In an advantageous embodiment, a jib of the first group, which is formed on a first brace, and a jib of the second group, which is formed on one of the braces adjacent to the first brace, are arranged radially displaced with respect to one another, as a result of which radial interlacing can be achieved in a simple manner.

In particular, a jib and its associated brace can delimit a substantially triangular space, into which a jib of an adjacent brace extends. Thus, good space exploitation is achieved, which allows a particularly compact design at high torque transmission capacity.

The jibs of adjacent braces that point to one another can be arranged in parallel or substantially in parallel to one another. Preferably, these jibs are spaced apart by a free intermediate space, with the intermediate space being preferably dimensioned in such a way that with radial deflection, the parallel or substantially parallel jibs do not contact each other.

By means of one or more longitudinal slits in the jibs and /or braces, their flexural behavior can be adjusted according to the requirements without great effort.

Depending on the assembly situation, the inner end portions of the braces can be connected radially in the center of the coupling. It is, however, also possible to connect the inner end portions of the braces to one another by means of a ring, so that a through-opening is formed in the center of the coupling.

According to another advantageous embodiment, radially inner jibs extend to an adjacent brace and are spaced from it in the circumferential direction only by a gap. Thus, long jibs can be achieved despite a compact design. This works in favor of significant radial compensation by the coupling.

Preferably, the free bending length of a brace between the branching of the jibs and a middle part connecting the braces is greater than the radial width of a jib. In particular, the free bending length can be two to twenty times the radial width. This works in favor of a high elasticity in the circumferential direction and is advantageous for great radial compensation.

The following detailed description of the present invention will be given with the help of the exemplary embodiments shown in the accompanying drawing. The drawing shows, in:
- Figure 1: a view of a first exemplary embodiment of a radially elastic coupling according to the invention,
- Figure 2: a schematic representation of the installation position of the coupling according to figure 1, 3, or 5 between two rotating machine parts,
- Figure 3: a view of a second exemplary embodiment of a radially elastic coupling according to the invention,
- Figure 4: a schematic representation of the installation position of the coupling according to figure 1, 3, or 5 between two rotating machine parts, and in
- Figure 5: a view of a third exemplary embodiment of a radially elastic coupling according to the invention.

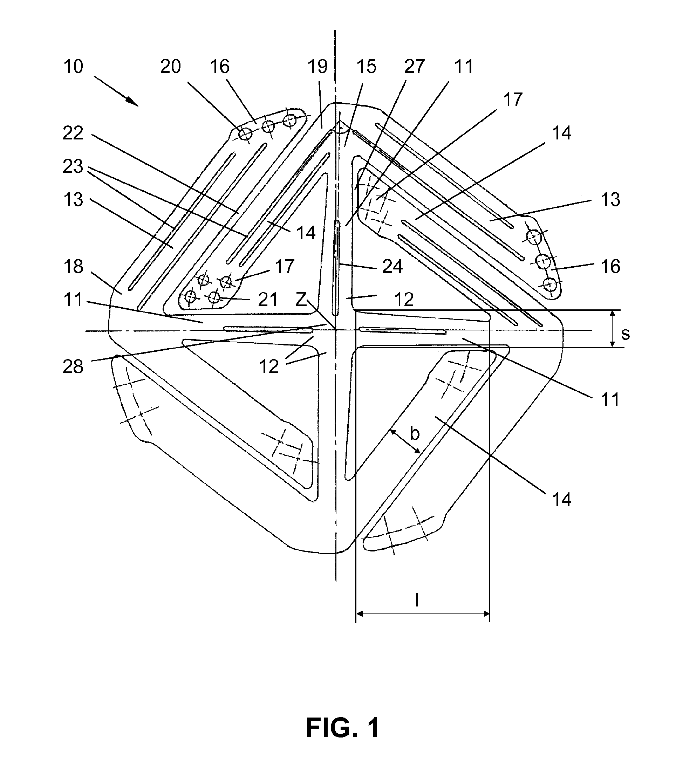

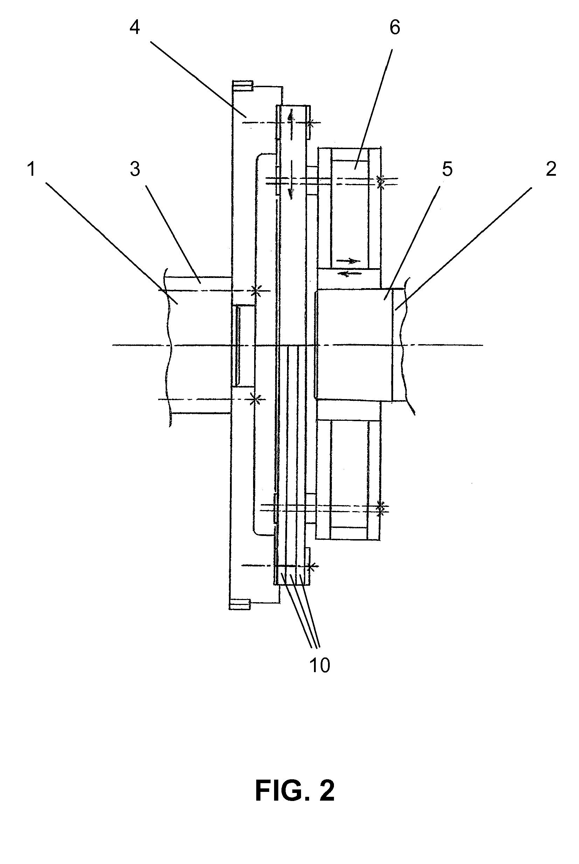

The first exemplary embodiment shown in figures 1 and 2 illustrates a radially elastic coupling 10 for connecting two rotating machine parts 1 and 2. As an example, figure 2 shows for the first machine part 1 an engine shaft 3 with a flywheel 4. The second machine part 2 is formed by a torsionally flexible coupling 6, which is fitted on an output shaft 5.

As shown in figure 1, the radially elastic coupling 10 comprises four braces 11, each extending in the radial direction. Here, the radially inner end portions 12 of the braces 11 are connected radially to one another at the centre Z of the coupling by means of a middle part 28.

Moreover, the radially elastic coupling 10 comprises two groups of two or more than two jibs 13 and 14 each. A connection to the rotating machine parts 1 and 2 is accomplished through the free end portions 16 and 17 of the jibs 13 and 14. In the case of the exemplary embodiment shown, four first jibs 13 and four second jibs 14 each are present, which results in a higher uniformity of the torque transmission. The jibs 13 and 14 each connect at one bound end portion 18 or 19 to radially outer end portions 15 of the braces 11, wherein at each brace 11, one jib 13 of the first group and one jib 14 of the second group are provided.

While the free end portions 16 of the first group of jibs 13 are connected to the first machine part 1, the free end portions 17 of the second group of jibs 14 are formed for connection to the second rotating machine part 2. For this purpose, at the free end portions 16 and 17 corresponding fastening openings 20 or 21 can be formed, so that the jibs 13 and 14 can be flanged onto the relevant machine parts 1 and 2 by means of bolts.

All the braces 11 and jibs 13 and 14 are arranged in a common plane, so that a flat, plate-type component is obtained, which is made of one piece and usually will have a substantially constant thickness.

The jibs 13 and 14 of a brace 11 are located on opposite sides of the brace and between each other include an angle of approximately 90 degrees. The jibs 13 and 14 of adjacent braces 11 are radially interlaced and proceed in parallel or at least substantially in parallel to one another, wherein in the present case, the first jibs 13 are disposed radially further outside than the jibs 14 of the second group. However, it is also possible to arrange the jibs 13 of the first group radially inside the jibs 14 of the second group. Between two parallel jibs 13 and 14 located next to each other in the radial direction, a radial intermediate space 22 is kept free, so that the jibs 13 and 14 do not contact each other in case of a deflection of the overall structure as a consequence of radial displacement between the machine parts 1 and 2.

The radial deflection of the jibs 13 and 14 as well as the deflection of the braces 11 in the circumferential direction can be adjusted as required by means of longitudinal slits 23 and 24. Moreover, the jibs 13 and 14 are able to deflect in the axial direction, i.e. vertically to the main plane of extent, i.e. the plane shown in Fig. 1, of the coupling 10, as a result of which in addition to a radial compensation, an easy axial compensation is made possible.

The radially inner jibs 14 each extend to an adjacent brace 11 and are spaced from it in the circumferential direction only by a small gap 27. Depending on the size of the coupling, the gap 27 has a width of 1 to 20 mm. Owing to the long jibs 14, high radial compensation by the coupling is possible. The jibs 13 located radially further outside extend similarly up to the height of an adjacent brace 11.

Further, a large free bending length of the braces 11 contributes to high radial compensation. This should be understood to be the distance between the branching of the jibs 13, 14 and a middle part 28 connecting the braces 11, as it is illustrated in figure 1. The free bending length 1 of the braces 11 is greater than the radial width b of a jib 13 or 14. It is preferably at least twice the width b or a multiple thereof. In addition, the braces 11 can be thinner than the jibs 13, 14, i.e. the maximum width s of the braces 11 is less than b.

Numerous modifications from the structure described above are possible. In particular, the number of radial braces 11 can be varied upwards or downwards, wherein the jibs 13 or 14 with the braces 11 can also include angles different from the one shown in figure 1.

Furthermore, for each jib 13 or 14, a separate brace 11 can be provided.

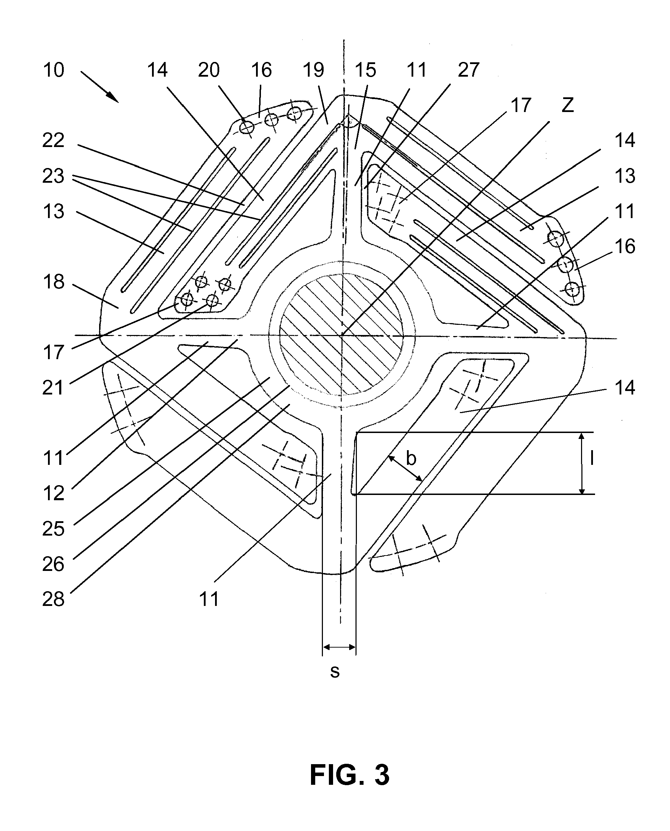

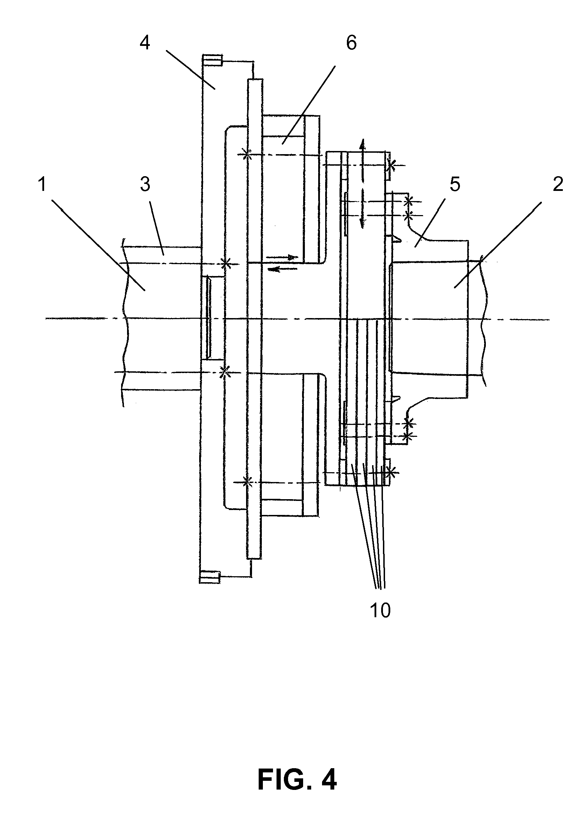

Figures 3 and 4 show another variation of the radially elastic coupling 10 in an alternative installation situation, in which the torsionally flexible coupling 6 is disposed on the engine side. In the illustrated variant of the radially elastic coupling 10, the inner end portions 12 of the braces 11 are connected to one another by means of a middle part 28 that is formed as a ring 25. The ring 25 comprises a through-opening 26 in the center Z of the coupling.

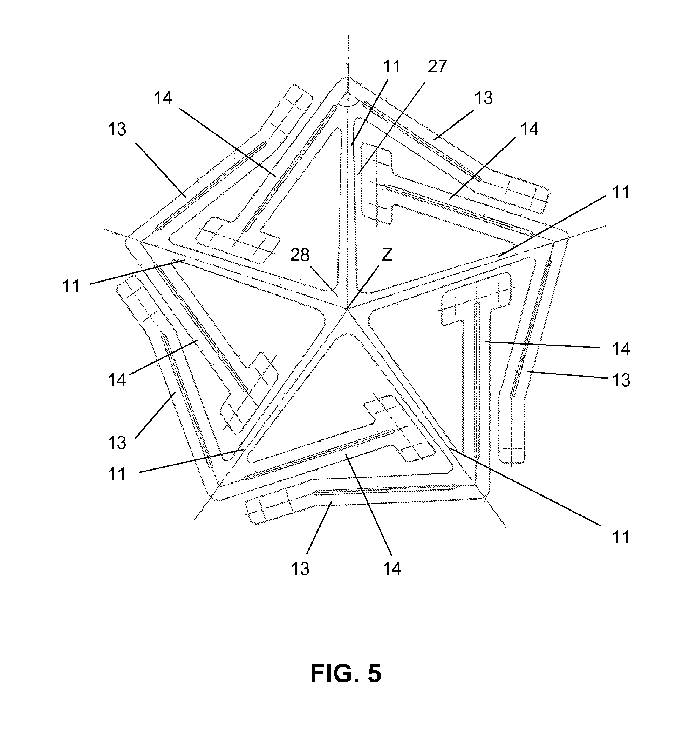

Figure 5 shows an example of a variant of a radially elastic coupling 10 with five braces 11, which are connected radially to one another in the center Z. Each brace 11 in turn has a first jib 13 and a second jib 14, which include an angle of approximately 90 degrees between each other. The first jibs 13 are connected with their free ends to a first machine part and the second jibs 14 are connected with their free ends to a second machine part. As with the first exemplary embodiment, here too, the jibs 13 and 14 of directly adjacent braces 11 pointing to one another are radially interlaced, wherein a jib 13 and its associated brace 11 delimit a substantially triangular free space. A jib 14 of an adjacent brace 11 extends into this free space, so that the jibs 13 and 14 overlap if viewed in the radial direction. The jib 14, which is situated radially further inside, proceeds up to the adjacent brace 11 and in the circumferential direction, is only spaced by a gap 27 from it, so that it may have a great length.

As indicated in Figures 2 and 4, several of the structures described above as radially flexible couplings 10 can be assembled in a stacked arrangement with the joining provided in the area of the respective connections. In this manner, a customization to the required torque transmission capacity can be achieved by very simple means.

The radially elastic coupling described above, with its compact design, allows the transmission of high torques while simultaneously providing high radial misalignment capacity. In addition, a uniform torque transmission becomes possible due to a greater number of jibs. The present invention has been disclosed above with the help of a detailed description of an exemplary embodiment as well as further modifications. It is, however, not limited hereupon but comprises all embodiments defined in the accompanying claims.

## Claims

1. A radially elastic coupling, comprising:
several radial braces (11), each of which has one radially inner end portion (12) and one radially outer end portion (15); and
a plurality of jibs (13, 14) extending from braces (11), each jib (13, 14) having one free end portion (16, 17) and one bound end portion (18, 19);
wherein
the inner end portions (12) of the braces (11) are connected with each other;
the jibs (13, 14) are each connected at one bound end portion (18, 19) to one outer end portion (15) of a brace (11);
the free end portions (16) of a first group of jibs (13) are adapted to connect to a first rotating machine part (1) and the free end portions (17) of a second group of jibs (14) are adapted to connect to a second rotating machine part (2);
all braces (11) and jibs (13, 14) are arranged in a common plane and made of one single piece; and
jibs (13, 14) of adjacent braces (11) pointing to one another are radially interlaced.

2. The radially elastic coupling according to claim 1, **characterized in that** one jib (13) of the first group, which is formed on the first brace, and one jib (14) of the second group, which is formed on a brace adjacent to the first brace, are arranged radially displaced with respect to one another.

3. The radially elastic coupling according to claim 1 or 2, **characterized in that** one jib (13) and its associated brace (11) delimit a substantially triangular free space, into which extends a jib (14) of an adjacent brace (11).

4. The radially elastic coupling according to claim 1 or 2, **characterized in that** jibs (13, 14) pointing to one another of adjacent braces (11) are arranged in parallel or substantially in parallel to one another.

5. The radially elastic coupling according to one of claims 1 to 4, **characterized in that** two jibs (13, 14) pointing to one another, of adjacent braces (11) are spaced apart radially by a free intermediate space (22).

6. The radially elastic coupling according to claim 5, **characterized in that** the intermediate space (22) is dimensioned in such a way that in case of radial deflection, the jibs (13, 14) do not contact each other.

7. The radially elastic coupling according to one of claims 1 to 6, **characterized in that** radially inner jibs (14) extend to an adjacent brace (11) and are spaced from it in the circumferential direction only by a gap (27).

8. The radially elastic coupling according to one of claims 1 to 7, **characterized in that** the inner end portions (12) of the braces (11) are radially connected to one another in the centre (Z) of the coupling.

9. The radially elastic coupling according to one of claims 1 to 7, **characterized in that** the inner end portions (12) of the braces (11) are connected to one another by means of a ring (25), which forms a through-passage in the centre (Z) of the coupling.

10. The radially elastic coupling according to one of claims 1 to 9, **characterized by** in that two or more than two braces (11) are provided with two jibs (13, 14) each.

11. The radially elastic coupling according to one of claims 1 to 10, **characterized in that** on a brace (11) one jib (13) of the first group and one jib (14) of the second group form an angle of approximately 90 degrees between each other.

12. The radially elastic coupling according to one of claims 1 to 11, **characterized in that** the free bending length (1) of a brace (11) between the branching of the jibs (13, 14) and a middle part connecting the braces (28) is greater than the radial width (b) of a jib (13, 14).

13. Coupling arrangement comprising several radially elastic couplings (10) according to one of claims 1 to 12, in a stacked arrangement.
